# EUROPÄISCHE PATENTSCHRIFT

(11) **EP 4 140 831 B1**
(45) Veröffentlichungstag und Bekanntmachung des Hinweises auf die Patenterteilung: **04.12.2024**
(21) Anmeldenummer: 22000200.0
(22) Anmeldetag: 24.08.2022
(51) Int. Cl.: B60R 22/18, B60R 22/03, B60R 22/02

(54) **KRAFTFAHRZEUG MIT MINDESTENS EINEM FAHRERSITZ**
MOTOR VEHICLE WITH AT LEAST ONE DRIVER'S SEAT
VÉHICULE AUTOMOBILE POURVU D'AU MOINS UN SIÈGE DE CONDUCTEUR

(30) Priorität: 26.08.2021 DE 202021002772 U
(43) Veröffentlichungstag der Anmeldung: 01.03.2023
(73) Patentinhaber: HSM Präzisionsteile & Sicherheitssysteme GmbH, 85119 Ernsgaden (DE)
(72) Erfinder: Neubauer, Kai, 93333 Neustadt an der Donau (DE)
(74) Vertreter: Witzany, Manfred

(56) Entgegenhaltungen:
- EP-A1- 1 721 648
- EP-A2- 0 875 423
- DE-A1- 2 149 261
- DE-A1- 2 343 938
- GB-A- 1 477 259
- JP-A- 2011 005 989

## Beschreibung

Die Erfindung betrifft ein Kraftfahrzeug mit mindestens einem Fahrersitz für einen Fahrer und mindestens einen Sicherheitsgurt. Der mindestens eine Sicherheitsgurt ist an einem verschwenkbaren Bügel gehalten, welcher zwischen einer Freigabestellung und einer Rückhaltestellung verschwenkbar ist.

Aus der EP 1 518 759 A1 ist ein Kraftfahrzeug bekannt, welches einen Fahrersitz aufweist. Um insbesondere den Fahrer beim Umkippen des Kraftfahrzeugs zu schützen, ist ein Sicherheitsgurt vorgesehen, der an einem um eine horizontale Achse schwenkbaren Bügel gehalten ist. Durch Verschwenken dieses Bügels in eine Rückhaltestellung wird der Sicherheitsgurt angelegt, damit dieser seine gewünschte Schutzwirkung entfalten kann. Dieses Kraftfahrzeug hat sich in der Praxis bewährt und bildet den Ausgangspunkt der vorliegenden Erfindung.

Aus der DE 23 43 938 A1 ist ein Kraftfahrzeug bekannt, welches einen Fahrersitz aufweist. Zum Sichern des Fahrers ist ein Sicherheitsgurt vorgesehen, der von einem Bügel gehalten ist. Dieser Bügel ist um eine horizontale Achse verschwenkbar und greift mit einer endseitigen Schlossfalle in ein Gurtschloss ein. In einer Freigabestellung hält dieser Bügel den Gurt in einer diagonal vor dem Sitz ausgerichteten Lage, um ein automatisches Anlegen des Gurtes durch motorischen Antrieb des Schutzbügels zu ermöglichen.

Aus der JP 2011 005989 A ist ein gattungsgemäßes Kraftfahrzeug mit mindestens einem Fahrersitz für einen Fahrer bekannt. Dieser Fahrersitz ist mit einem Sicherheitsgurt ausgerüstet, der den Fahrer im Falle eines Unfalls auf dem Fahrersitz hält, wobei der Sicherheitsgurt an einem verschwenkbaren Bügel gehalten ist. Dieser Bügel ist zum Anlegen des Sicherheitsgurts von einer ein Einsteigen zulassenden Freigabestellung in eine den Fahrer schützende Rückhaltestellung verschwenkbar. Oberhalb des Fahrersitzes ist dieser Bügel nach vorne, nicht jedoch zur Seite weggekröpft. Der Erfindung liegt die Aufgabe zugrunde, ein Kraftfahrzeug der eingangs genannten Art zu schaffen, welches sich durch eine verbesserte Akzeptanz auszeichnet.

Diese Aufgabe wird mit den folgenden Merkmalen gelöst.

Ein erfindungsgemäßes Kraftfahrzeug ist von grundsätzlich beliebiger Art, wobei aber insbesondere an Förderfahrzeuge wie Flurförderfahrzeuge, Bagger, Frontlader und Planierfahrzeuge gedacht ist. Diese Aufzählung ist jedoch nur beispielhaft und nicht abschließend zu verstehen. Das Kraftfahrzeug weist mindestens einen Fahrersitz für einen Fahrer auf, dem mindestens ein Sicherheitsgurt zugeordnet ist. Dieser mindestens eine Sicherheitsgurt hat die Aufgabe, den Fahrer im Falle eines Unfalls auf dem mindestens einen Fahrersitz zu halten. Als Unfall ist hierbei nicht nur ein Zusammenstoß mit anderen Fahrzeugen oder festen Gegenständen wie Wänden zu verstehen, vielmehr ist insbesondere das Kippen dieses Kraftfahrzeugs eine große Gefahrenquelle für den Fahrer. Insbesondere Kraftfahrzeuge zum Befördern von Ladung sind der Gefahr ausgesetzt, dass durch unachtsame Bedienung, enge Platzverhältnisse oder im Gelände unerwünschte Schwerpunktsverlagerungen entstehen, die dann in der Folge zum Kippen des Fahrzeugs führen können. In der Regel sind derartige Kraftfahrzeuge hinreichend stabil gebaut, um den Fahrer auch in dieser Situation ausreichend zu schützen. Es hat sich jedoch herausgestellt, dass Fahrer in Unfallsituationen oftmals reflexartig versuchen, das Fahrzeug zu verlassen, so dass erst hierdurch die besondere Schutzwirkung des Fahrzeugs verloren geht. Da oftmals mit schweren Ladungen hantiert wird, besteht für den Fahrer beim Verlassen des Fahrzeugs ein beträchtliches Unfallrisiko, welches auch zum Tod des Fahrers führen kann. Aus diesem Grund ist es wichtig, dass der Fahrer auf seinem Fahrersitz bleibt, bis das Unfallgeschehen abgeschlossen ist. Zu diesem Zweck ist es bekannt, dem Fahrersitz mindestens einen Sicherheitsgurt zuzuordnen, der ihn auf dem Fahrersitz hält. Leider wird jedoch diese zusätzliche Sicherheitseinrichtung von Fahrern allzu oft ignoriert, da sie sich der damit verbundenen Gefahr nicht bewusst sind und das Anlegen des Sicherheitsgurts nur als lästig empfunden wird. Insbesondere wird die Unfallgefahr dadurch massiv unterschätzt, dass sich diese Fahrzeuge in der Regel sehr langsam bewegen, so dass die üblichen Gefahrenquellen im Straßenverkehr tatsächlich praktisch ausgeschlossen werden können, die besonderen Gefahren der transportierten Ladung bzw. des Terrains aber nicht korrekt eingeschätzt werden. Zur Erzielung einer ausreichenden Schutzwirkung ist es daher von besonderer Bedeutung, dass die vorhandenen Schutzsysteme, also insbesondere der Sicherheitsgurt, auch tatsächlich genutzt werden. Die Sicherungswirkung dieser Sicherheitssysteme ist daher maßgeblich von der Akzeptanz durch die Fahrer abhängig. Es hat sich bewährt, den mindestens einen Sicherheitsgurt an mindestens einem verschwenkbaren Bügel zu halten, der zum Anlegen des mindestens einen Sicherheitsgurts von einer Freigabestellung in eine Rückhaltestellung verschwenkbar ist. Dabei spielt eine mögliche Rückhaltewirkung des mindestens einen Bügels nur eine untergeordnete Rolle. Wichtig ist, dass sich der mindestens eine Sicherheitsgurt beim Verschwenken des mindestens einen Bügels ohne weitere Maßnahmen durch den Fahrer anlegt. Dieser Vorgang soll möglichst einfach, vorzugsweise mit einem einzigen Handgriff durchführbar sein. Andererseits darf der mindestens eine Bügel das Ein- und Aussteigen des Fahrers nicht behindern, da dies anderenfalls die Akzeptanz des Sicherheitssystems beeinträchtigen würde. Deshalb ist der mindestens eine Bügel von einer ein Ein- und Aussteigen ermöglichenden Freigabestellung in eine den Fahrer auf dem Fahrersitz haltende Rückhaltestellung verschwenkbar. Trotz der oben beschriebenen Maßnahmen kam es immer wieder vor, dass Fahrer das beschriebene Sicherheitssystem als lästig und unnötig empfanden und einfach in der Freigabestellung des mindestens einen Bügels gefahren sind. Dies ging sogar so weit, dass eingebaute Sperren deaktiviert wurden, um den mindestens einen Sicherheitsgurt nicht anlegen zu müssen. Ein sehr positiver Effekt des mindestens einen Bügels ist es jedoch, dass dieser verhindert, dass der mindestens eine Sicherheitsgurt einfach in angeschnallter Lage verbleibt und der Fahrer sich auf diesen setzt. Bei dieser Art des Fahrzeugbetriebs hätte der Fahrer Probleme, das Fahrzeug zu besteigen bzw. zu verlassen, da ihn nun der mindestens eine Bügel hindert. Trotzdem hat sich herausgestellt, dass die Akzeptanz des Sicherheitssystems weiter verbessert werden muss, um ggf. auch tödliche Unfälle zu vermeiden. Zu diesem Zweck wird der mindestens eine Gurt in der Freigabestellung des mindestens einen Bügels so gehalten, dass er den Fahrer behindert. Die Art der Behinderung ist dabei grundsätzlich variierbar. Insbesondere ist daran gedacht, den Fahrer in seiner Sicht und/oder bei der Bedienung des Fahrzeugs zu behindern. Diese Aufzählung ist jedoch nur beispielhaft und nicht abschließend zu verstehen. Dies reicht grundsätzlich aus, um den Fahrer davon abzuhalten, das Fahrzeug in der Freigabestellung des mindestens einen Bügels zu bedienen. Um dem Fahrer die nötige Raumfreiheit während der Bedienung des Fahrzeugs zu geben, ist der mindestens eine Bügel oberhalb des mindestens einen Fahrersitzes von diesem weggekröpft. Auf diese Weise wird der zur Verfügung stehende Platz in der Fahrerkabine optimal genutzt und die Akzeptanz des Sicherheitssystems erhöht. Um den mindestens einen Bügel sicher in der Rückhaltestellung zu halten, ist am mindestens einen Bügel mindestens eine Schlossfalle vorgesehen, die in der Rückhaltestellung in mindestens ein fahrzeugfestes Schloss eingreift. Hierbei kann es sich um ein übliches Gurtschloss handeln, wobei auch alternative Ausführungen denkbar sind. Insbesondere ist daran gedacht, zum Nachrüsten von Bestandsfahrzeugen das bereits vorhandene Gurtschloss zu diesem Zweck zu nutzen.

Oftmals sind Kraftfahrzeuge derart ausgebildet, dass sie im Bereich einer Sitzfläche des mindestens einen Fahrersitzes dicht verbaut sind, zumal viele Bedienungselemente, beispielsweise zur Steuerung der Hydraulik bzw. eine Joystick-Steuerung, angebracht sind. Damit muss der mindestens eine Bügel relativ dicht am Fahrersitz montiert werden, um den zur Verfügung stehenden Platz optimal zu nutzen. Dies führt jedoch im Schulterbereich zu einer unangenehmen Einengung, die wiederum die Akzeptanz des Sicherheitssystems reduzieren würde. Zur Vermeidung dieses Problems ist es vorteilhaft, den mindestens einen Bügel oberhalb des mindestens einen Fahrersitzes von diesem wegzukröpfen und/oder nach außen zu krümmen. Damit besitzt der mindestens eine Bügel - in horizontaler Richtung betrachtet - im unteren Bereich nahe der Sitzfläche des mindestens einen Fahrersitzes einen geringeren Abstand von diesem als im Schulterbereich. Als Abstand ist dabei der Normalenabstand von einer vertikalen Mittenebene durch den mindestens einen Fahrersitz zu verstehen. Auf diese Weise wird sowohl der zur Verfügung stehende Platz neben der Sitzfläche optimal benutzt als auch eine unangenehme Einengung im Schulterbereich vermieden.

Um das Ein- und Aussteigen zu erleichtern, ist es vorteilhaft, wenn der mindestens eine Bügel von mindestens einer Feder in der Freigabestellung gehalten ist. Damit muss der mindestens eine Bügel nicht erst in die Freigabestellung gebracht werden, bevor der Fahrer auf dem mindestens einen Fahrersitz Platz nimmt. Als Feder wird vorzugsweise eine Gasfeder eingesetzt, wobei alternativ auch andere Federarten wie beispielsweise helixförmige Federn, vorzugsweise aus Federstahl, eingesetzt werden können.

Zur weiteren Erhöhung der Akzeptanz dieser Sicherungsvorrichtung ist es günstig, wenn am mindestens einen Bügel mindestens eine Handhabe vorgesehen ist. Diese mindestens eine Handhabe zeigt dem Fahrer an, an welcher Stelle er den mindestens einen Bügel erfassen soll, um diesen in einem Zug und ohne umzugreifen, in die Rückhaltestellung zu bringen. Dadurch wird eine umständliche Handhabung von vornherein vermieden, die die Akzeptanz der Sicherungsvorrichtung in unnötiger Weise reduzieren könnte.

Die mindestens eine Schlossfalle kann zu Verletzungsproblemen führen, da sie in der Freigabestellung offen in der Fahrerkabine liegt. Zur Behebung dieses Problems ist es vorteilhaft, wenn an der mindestens einen Schlossfalle mindestens eine ggf. mehrschalige Abdeckung vorgesehen ist, die die mindestens eine Schlossfalle schützt. Diese mindestens eine Abdeckung wird vom mindestens einen Schloss weggedrückt, um in unmittelbarer Nähe der Rückhaltestellung die mindestens eine Schlossfalle freizugeben. Vorzugsweise besteht die mindestens eine Abdeckung aus einem Leder und/oder relativ weichen Polymer, so dass weder von dieser noch von der umschlossenen, mindestens einen Schlossfalle keinerlei Verletzungsgefahr ausgeht. Für das Polymer ist eine Härte zwischen 15 shore A bis 100 shore A bevorzugt.

Um zu vermeiden, dass der Fahrer das Kraftfahrzeug in der Freigabestellung des mindestens einen Bügels bedient, kann sich der mindestens eine Gurt in der Freigabestellung diagonal über dem mindestens einen Fahrersitz erstrecken. Damit behindert er insbesondere die Sicht des Fahrers nach vorne, so dass der Fahrer in der Regel den mindestens einen Bügel in die Rückhaltestellung verbringen wird, was dann als angenehmer empfunden wird.

Üblicherweise sind Sicherheitsgurte in Kraftfahrzeugen schwarz gefärbt. Für den vorliegenden Erfindungsgegenstand ist es jedoch zweckmäßiger, den mindestens einen Sicherheitsgurt wenigstens teilweise rot zu färben. Dabei wird der Umstand genutzt, dass der auffällig rote, mindestens eine Sicherheitsgurt, nur von außen sichtbar ist, wenn sich der mindestens eine Bügel in der Freigabestellung befindet. Aufsichtspersonen bzw. Vorgesetzte oder Sicherheitsbeauftragte können daher sehr leicht von außen überprüfen, ob ein Fahrer unzulässigerweise ohne angelegten Sicherheitsgurt das Fahrzeug bedient und entsprechende Gegenmaßnahmen ergreifen. Bei einem schwarzen Sicherheitsgurt ist die Erkennbarkeit von außen wesentlich schwieriger.

Zur weiteren Verbesserung der Überprüfbarkeit des mindestens einen Sicherheitsgurts von außen ist es vorteilhaft, wenn der mindestens eine Sicherheitsgurt und/oder der mindestens eine Bügel mit mindestens einem Leuchtmittel versehen ist. Damit ist insbesondere auch bei schlechten Lichtverhältnissen während der Dämmerung eine einfache Überprüfung der Nutzung der Sicherheitssysteme durch den Fahrer möglich. Vorzugsweise wird das Leuchtmittel blinkend ausgebildet, um die Erkennbarkeit weiter zu verbessern und den Fahrer bei nicht korrekt angelegtem, mindestens einem Sicherheitsgurt zusätzlich zu irritieren.

Vorzugsweise ist das mindestens eine Leuchtmittel derart angesteuert, dass es in der Rückhaltestellung erlischt. Eine entsprechende Steuerung kann beispielsweise durch einen Schalter im Bereich des mindestens einen Schlosses und/oder der mindestens einen Schlossfalle realisiert werden. Damit ist eine Lageprüfung der Rückhalteeinrichtung möglich, was dann zur Ansteuerung des mindestens einen Leuchtmittels vorteilhaft verwendet werden kann.

Es ist günstig, den mindestens einen Bügel in steuernder Wirkverbindung mit dem Fahrzeug auszubilden, so dass sich eine Wegfahrsperre ergibt und/oder ein akustisches und/oder optisches Signal erzeugt wird, wenn sich der mindestens eine Bügel nicht in der Rückhaltestellung befindet. Damit muss der Fahrer zunächst die Wegfahrsperre manipulieren, um die Sicherheitsvorrichtung zu deaktivieren, was allerdings durch die oben genannten, zusätzlichen Nachteile des Fahrers nicht als zweckmäßig empfunden wird. Damit kann man davon ausgehen, dass die Wegfahrsperre nicht deaktiviert wird, und somit auch ein versehentliches Nichtbenutzen der Sicherheitseinrichtung zuverlässig unterbunden bleibt. Das akustische und/oder optische Signal dient als Warnung für den Fahrer.

Es ist außerdem vorteilhaft, wenn am mindestens einen Fahrersitz mindestens ein Sitzkontaktschalter vorgesehen ist. Dieser registriert, wann sich der Fahrer auf den mindestens einen Fahrersitz gesetzt hat und vergleicht diesen Zeitpunkt mit dem Überführen des mindestens einen Bügels in die Rückhaltestellung. Die Steuerung reagiert auf diese Reihenfolge derart, dass die Wegfahrsperre, das optische Signal und/oder das akustische Signal aktiv bleiben, wenn der mindestens eine Sitzkontaktschalter nach dem Überführen des mindestens einen Bügels in die Rückhaltestellung betätigt wurde. Auf diese Weise soll vermieden werden, dass der mindestens eine Bügel in der Rückhaltestellung verbleibt und sich der Fahrer oberseitig auf den Sicherheitsgurt setzt. Somit wird ein unzulässiges Umgehen dieser Sicherheitseinrichtung vermieden.

Der Erfindungsgegenstand wird beispielhaft anhand der Zeichnung erläutert, ohne den Schutzumfang zu beschränken.

Es zeigt:
- Figur 1: eine Seitenansicht eines Kraftfahrzeugs,
- Figur 2: eine räumliche Darstellung eines Fahrersitzes mit einem Rückhaltesystem in der Freigabestellung und
- Figur 3: die Anordnung gemäß Figur 2 in der Rückhaltestellung.

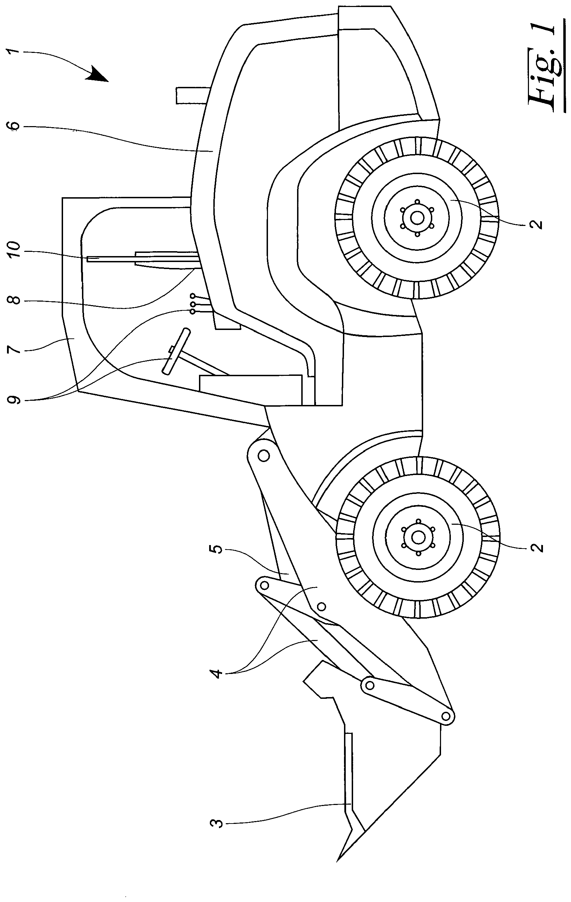

Die Figur 1 zeigt eine Seitenansicht eines Kraftfahrzeugs, insbesondere eines Frontladers. Dieses Kraftfahrzeug 1 weist Räder 2 auf, die alternativ auch durch Ketten für eine bessere Geländegängigkeit ersetzt werden können. Das Kraftfahrzeug 1 weist außerdem eine Ladeeinrichtung 3 auf, die zum Transport von nicht dargestellter Ladung dient. Im Ausführungsbeispiel gemäß Figur 1 ist diese Ladeeinrichtung 3 als Schaufel ausgebildet. Die Ladeeinrichtung 3 ist über Hebelarme 4 mittels Hydraulikzylinder 5 verstellbar.

Das Kraftfahrzeug 1 weist außerdem eine heckseitige Motorhaube 6 auf, unter der ein Verbrennungsmotor zum Antrieb der Räder 2 sowie der Hydraulikzylinder 5 vorgesehen ist. Zwischen den Hebelarmen 4 und der Motorhaube 6 weist das Kraftfahrzeug 1 eine Fahrerkabine 7 auf, in der ein Fahrersitz 8 vorgesehen ist. In dieser Fahrerkabine 7 befinden sich außerdem alle Bedienelemente 9, mit denen das Kraftfahrzeug 1 mit all seinen Funktionen gesteuert werden kann. Ein Rückhaltesystem 10 hält insbesondere im Falle eines Unfalls den Fahrer auf dem Fahrersitz 8.

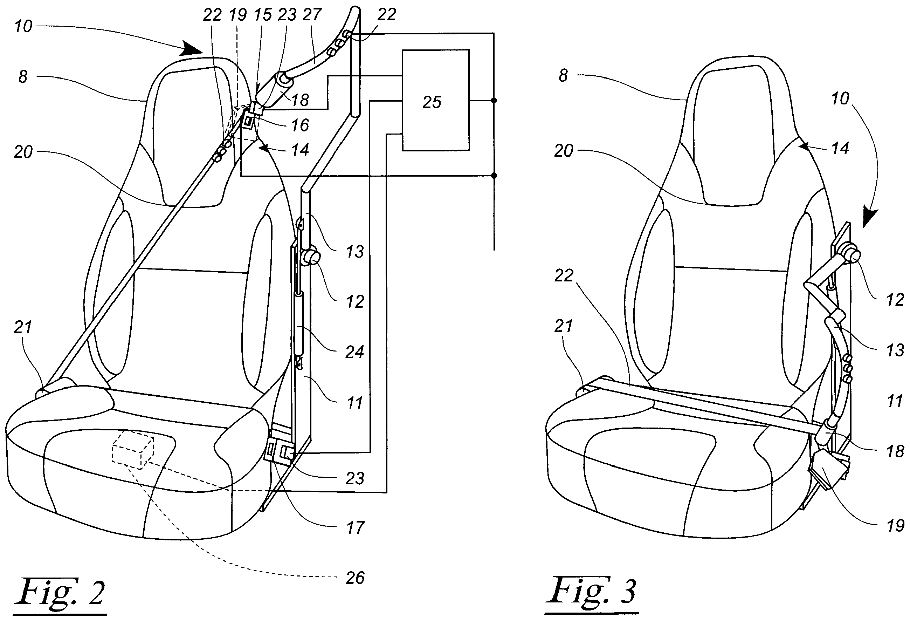

Die weiteren Details, insbesondere das Rückhaltesystem 10 werden anhand der Detaildarstellungen gemäß den Figuren 2 und 3 erläutert. Diese Figuren zeigen den Fahrersitz 8 zusammen mit einem Rückhaltesystem 10, wobei alle anderen Teile des Kraftfahrzeugs 1 weggelassen sind. Am Fahrersitz 8 ist ein Halteblech 11 befestigt, an dem über ein Drehgelenk 12 ein Bügel 13 verschwenkbar gehalten ist. In der in Figur 2 dargestellten Freigabestellung ragt der Bügel 13 nach oben, um ein ungehindertes Ein- und Aussteigen des Fahrers zu ermöglichen.

Der Bügel 13 ist derart gekröpft, dass er in einem Schulterbereich des Fahrers von diesem weggebogen ist. Dadurch ergibt sich eine verbesserte Schulterfreiheit insbesondere in der in Figur 3 dargestellten Rückhaltestellung. An diesen gekröpften Bereich schließt sich ein gekrümmter Abschnitt 27 an, welcher in der Freigabestellung gemäß Figur 2 im Wesentlichen horizontal nach vorne gerichtet ist. Die Krümmung dieses gekrümmten Bereichs 27 ist dabei vom Fahrersitz 8 weggerichtet, um in der Rückhaltestellung gemäß Figur 3 einen größeren Freiraum für den Fahrer zu gewährleisten.

In einem freien Endbereich 15 weist der Bügel 13 eine Schlossfalle 16 auf, die mit einem Schloss 17 neben dem Fahrersitz 8 in der Rückhaltestellung gemäß Figur 3 zusammenwirkt. Dabei wird der Bügel 13 mittels der Schlossfalle 16 im Schloss 17 arretiert, so dass ein selbständiges Verstellen des Bügels 13 in die Freigabestellung gemäß Figur 2 ausgeschlossen ist. Hierzu muss eine entsprechende Endarretierung am Schloss 17 betätigt werden.

Im freien Endbereich 15 weist der Bügel außerdem eine Handhabe 18 auf, an der der Bügel 13 durch den Fahrer ergriffen werden kann, um ihn mit einer einfachen Schwenkbewegung in die Rückhaltestellung gemäß Figur 3 zu bringen. Diese Handhabe soll nicht nur eine ergonomische Funktion zum besseren Ergreifen des Bügels 13 liefern, sie sorgt vielmehr dafür, dass der Fahrer sofort weiß, an welchem Punkt er am Bügel 13 angreifen muss, um diesen verschwenken zu können.

Um ein Verletzungsrisiko durch die Schlossfalle 16 auszuschließen, ist diese von einer mehrschaligen Abdeckung 19 umgeben. Diese Abdeckung 19 wird beim Verschwenken des Bügels 13 in die Rückhaltestellung vom Schloss 17 auseinandergedrückt, so dass die Schlossfalle 16 in das Schloss 17 eindringen kann.

Am Bügel 13 ist außerdem ein Sicherheitsgurt 20 befestigt, der in einer Rolle 21 aufgewickelt wird. Dieser Sicherheitsgurt 20 verläuft in der in Figur 2 dargestellten Freigabestellung diagonal über den Fahrersitz 8, so dass er sowohl die Sicht als auch die Bedienung des Kraftfahrzeugs 1 durch den Fahrer behindert. Dies sorgt für eine verbesserte Akzeptanz des Rückhaltesystems 10, so dass der Fahrer das Kraftfahrzeug 1 stets in der in Figur 3 dargestellten Rückhaltestellung bedient.

Um die korrekte Benutzung des Rückhaltesystems 10 auch von außen beobachten zu können, ist der Sicherheitsgurt 20 rot gefärbt und weist außerdem Leuchtmittel 22, vorzugsweise in Form von Leuchtdioden, auf. Entsprechende Leuchtmittel 22 sind außerdem am Bügel 13 vorgesehen. Endschalter 23 im Bereich der Schlossfalle 16 und/oder des Schlosses 17 aktivieren die Leuchtmittel 22 vorzugsweise in einem blinkenden Modus, sofern sich der Bügel 13 nicht in der in Figur 3 dargestellten Rückhaltestellung befindet. Auf diese Weise wird deutlich, dass das Kraftfahrzeug 1 nicht ordnungsgemäß genutzt wird.

Im Bereich des Drehgelenks 12 ist außerdem eine Feder 24 vorgesehen, die als Gasfeder ausgebildet ist. Diese Feder 24 sorgt für eine Vorspannung des Bügels 13 in die in Figur 2 dargestellte Freigabestellung, um ein einfaches Ein- und Aussteigen zu gewährleisten.

Die Endschalter 23 sind mit einer nicht dargestellten Motorsteuerung derart verbunden, dass sich eine Wegfahrsperre ergibt, wenn sich das Rückhaltesystem 10 nicht in der in Figur 3 dargestellten Rückhaltestellung befindet.

Dem Fahrersitz 8 ist außerdem ein Sitzkontaktschalter 26 zugeordnet, der auslöst, wenn sich der Fahrer auf den Fahrersitz 8 setzt. Dieser Sitzkontaktschalter 26 ist mit der Steuerung 25 verbunden, wobei die Steuerung 25 die Betätigungsreihenfolge zwischen dem Sitzkontaktschalter 26 einerseits und dem Endschalter 23 andererseits detektiert. Dabei wird die durch die Steuerung 25 realisierte Wegfahrsperre nur dann deaktiviert, wenn der Sitzkontaktschalter 26 vor dem Endschalter 23 betätigt wurde. Auf diese Weise wird vermieden, dass sich der Fahrer auf den Fahrersitz 8 setzt, wenn sich der Bügel 13 bereits in der in Figur 3 dargestellten Rückhaltestellung befindet. In diesem Fall würde der Fahrer oberseitig auf dem Sicherheitsgurt 22 sitzen, so dass der Sicherheitsgurt 22 keinerlei Schutzwirkung entfalten könnte.

### Bezugszeichenliste

- 1: Kraftfahrzeug
- 2: Rad
- 3: Ladeeinrichtung
- 4: Hebelarm
- 5: Hydraulikzylinder
- 6: Motorhaube
- 7: Fahrerkabine
- 8: Fahrersitz
- 9: Bedienelement
- 10: Rückhaltesystem
- 11: Halteblech
- 12: Drehgelenk
- 13: Bügel
- 14: Schulterbereich
- 15: freier Endbereich
- 16: Schlossfalle
- 17: Schloss
- 18: Handhabe
- 19: Abdeckung
- 20: Sicherheitsgurt
- 21: Rolle
- 22: Leuchtmittel
- 23: Endschalter
- 24: Feder
- 25: Steuerung
- 26: Sitzkontaktschalter
- 27: gekrümmter Abschnitt

## Patentansprüche

1. Kraftfahrzeug mit mindestens einem Fahrersitz (8) für einen Fahrer und mindestens einem Sicherheitsgurt (20), der den Fahrer im Falle eines Unfalls auf dem Fahrersitz (8) hält, wobei der mindestens eine Sicherheitsgurt (20) an mindestens einem verschwenkbaren Bügel (13) gehalten ist, welcher zum Anlegen des mindestens einen Sicherheitsgurts (20) von einer ein Einsteigen zulassenden Freigabestellung in eine den Fahrer schützenden Rückhaltestellung verschwenkbar ist, und der mindestens eine Bügel (13) in der Freigabestellung den mindestens einen Sicherheitsgurt (20) in einer Stellung hält, in der er den Fahrer behindert, **dadurch gekennzeichnet, dass** der mindestens eine Bügel (13) oberhalb des mindestens einen Fahrersitzes (8) seitlich von diesem weggekröpft ist, und der mindestens eine Bügel (13) mindestens eine Schlossfalle (16) aufweist, die in der Rückhaltestellung in mindestens ein fahrzeugfestes Schloss (17) eingreift.

2. Kraftfahrzeug nach Anspruch 1, **dadurch gekennzeichnet, dass** der mindestens eine Bügel (13) oberhalb des mindestens einen Fahrersitzes (8) in der Rückhaltestellung nach außen gekrümmt ist.

3. Kraftfahrzeug nach Anspruch 1 oder 2, **dadurch gekennzeichnet, dass** der mindestens eine Bügel (13) von mindestens einer Feder (24) in der Freigabestellung gehalten ist.

4. Kraftfahrzeug nach mindestens einem der Ansprüche 1 bis 3, **dadurch gekennzeichnet, dass** der mindestens eine Bügel (13) mindestens eine Handhabe (18) aufweist.

5. Kraftfahrzeug nach mindestens einem der Ansprüche 1 bis 4, **dadurch gekennzeichnet, dass** die mindestens eine Schlossfalle (16) von mindestens einer mehrschaligen Abdeckung (19) geschützt ist, die vom mindestens einen Schloss (17) wegdrückbar ist.

6. Kraftfahrzeug nach mindestens einem der Ansprüche 1 bis 5, **dadurch gekennzeichnet, dass** sich der mindestens eine Sicherheitsgurt (20) in der Freigabestellung diagonal über den mindestens einen Fahrersitz (8) erstrecken kann.

7. Kraftfahrzeug nach mindestens einem der Ansprüche 1 bis 6, **dadurch gekennzeichnet, dass** der mindestens eine Sicherheitsgurt (20) wenigstens teilweise rot gefärbt ist.

8. Kraftfahrzeug nach mindestens einem der Ansprüche 1 bis 7, **dadurch gekennzeichnet, dass** der mindestens eine Sicherheitsgurt (20) und/oder der mindestens eine Bügel (13) mit mindestens einem Leuchtmittel (22) versehen ist.

9. Kraftfahrzeug nach Anspruch 8, **dadurch gekennzeichnet, dass** das mindestens eine Leuchtmittel (22) in der Rückhaltestellung ausgeschaltet ist.

10. Kraftfahrzeug nach mindestens einem der Ansprüche 1 bis 9, **dadurch gekennzeichnet, dass** eine Steuerung (25) vorgesehen ist, welche zumindest die Fahrzeugfahrt unterbindet und/oder ein akustisches und/oder optisches Signal abgibt, wenn sich der mindestens eine Bügel (13) nicht in der Rückhaltestellung befindet.

11. Kraftfahrzeug nach Anspruch 10, **dadurch gekennzeichnet, dass** am mindestens einen Fahrersitz (8) mindestens ein Sitzkontaktschalter (26) vorgesehen ist, der mit der Steuerung (25) in Wirkverbindung steht, welche eine Betätigungsreihenfolge zwischen dem Auslösen des mindestens einen Sitzkontaktschalters (26) und dem Verbringen des mindestens einen Bügels (13) in die Rückhaltestellung abfragt.

## Claims

1. Motor vehicle having at least one driver's seat (8) for a driver and at least one safety belt (20) which in the event of an accident holds the driver on the driver's seat (8), wherein the at least one safety belt (20) is held on at least one pivotable bracket (13) which for fastening the at least one safety belt (20) is pivotable from a releasing position, which permits entry, to a restraining position, which protects the driver, and the at least one bracket (13) in the releasing position holds the at least one safety belt (20) in a position in which the latter impedes the driver, **characterized in that** the at least one bracket (13) above the at least one driver's seat (8) is laterally elbowed away from the latter, and the at least one bracket (13) has at least one lock latch (16) which in the restraining position engages in at least one buckle (17) fixed to the vehicle.

2. Motor vehicle according to Claim 1, **characterized in that** the at least one bracket (13) in the restraining position above the at least one driver's seat (8) is curved outward.

3. Motor vehicle according to Claim 1 or 2, **characterized in that** the at least one bracket (13) in the releasing position is held by at least one spring (24).

4. Motor vehicle according to at least one of Claims 1 to 3, **characterized in that** the at least one bracket (13) has at least one handle (18).

5. Motor vehicle according to at least one of Claims 1 to 4, **characterized in that** the at least one lock latch (16) is protected by at least one multi-shell cover (19) which is able to be pushed away from the at least one buckle (17).

6. Motor vehicle according to at least one of Claims 1 to 5, **characterized in that** the at least one safety belt (20) in the releasing position can extend diagonally across the at least one driver's seat (8).

7. Motor vehicle according to at least one of Claims 1 to 6, **characterized in that** the at least one safety belt (20) is at least partially dyed red.

8. Motor vehicle according to at least one of Claims 1 to 7, **characterized in that** the at least one safety belt (20) and/or the at least one bracket (13) are/is provided with at least one illumination means (22).

9. Motor vehicle according to Claim 8, **characterized in that** the at least one illumination means (22) in the restraining position is switched off.

10. Motor vehicle according to at least one of Claims 1 to 9, **characterized in that** a controller (25) which, when the at least one bracket (13) is not in the restraining position, at least prevents the travel of the vehicle and/or emits an acoustic and/or optical signal is provided.

11. Motor vehicle according to Claim 10, **characterized in that** at least one seat contact switch (26) which is operatively connected to the controller (25) is provided on the at least one driver's seat (8), said controller querying an activation sequence between the triggering of the at least one seat contact switch (26) and the moving of the at least one bracket (13) to the restraining position.

## Revendications

1. Véhicule automobile, comprenant au moins un siège de conducteur (8) pour un conducteur et au moins une ceinture de sécurité (20) qui maintient le conducteur sur le siège de conducteur (8) en cas d'accident, dans lequel ladite au moins une ceinture de sécurité (20) est maintenue au niveau d'au moins une barre pivotante (13) qui, pour mettre ladite au moins une ceinture de sécurité (20), peut pivoter d'une position de déblocage permettant de monter à une position de retenue protégeant le conducteur, et dans la position de déblocage, ladite au moins une barre (13) maintient ladite au moins une ceinture de sécurité (20) dans une position dans laquelle elle entrave le conducteur,
**caractérisé en ce que** ladite au moins une barre (13) est coudée au-dessus dudit au moins un siège de conducteur (8) en s'écartant latéralement de celui-ci, et ladite au moins une barre (13) présente au moins un pêne de serrure (16) qui vient en prise dans au moins une serrure (17) solidaire du véhicule dans la position de retenue.

2. Véhicule automobile selon la revendication 1, **caractérisé en ce que** ladite au moins une barre (13) est courbée vers l'extérieur au-dessus dudit au moins un siège de conducteur (8) dans la position de retenue.

3. Véhicule automobile selon la revendication 1 ou 2, **caractérisé en ce que** ladite au moins une barre (13) est maintenue dans la position de déblocage par au moins un ressort (24).

4. Véhicule automobile selon au moins l'une des revendications 1 à 3, **caractérisé en ce que** ladite au moins une barre (13) présente au moins une manette (18).

5. Véhicule automobile selon au moins l'une des revendications 1 à 4, **caractérisé en ce que** ledit au moins un pêne de serrure (16) est protégé par au moins un recouvrement multicoque (19) qui peut être écarté de ladite au moins une serrure (17).

6. Véhicule automobile selon au moins l'une des revendications 1 à 5, **caractérisé en ce que** dans la position de déblocage, ladite au moins une ceinture de sécurité (20) peut s'étendre en diagonale à travers ledit au moins un siège de conducteur (8).

7. Véhicule automobile selon au moins l'une des revendications 1 à 6, **caractérisé en ce que** ladite au moins une ceinture de sécurité (20) est au moins partiellement teinte en rouge.

8. Véhicule automobile selon au moins l'une des revendications 1 à 7, **caractérisé en ce que** ladite au moins une ceinture de sécurité (20) et/ou ladite au moins une barre (13) sont munies d'au moins un moyen lumineux (22).

9. Véhicule automobile selon la revendication 8, **caractérisé en ce que** ledit au moins un moyen lumineux (22) est éteint dans la position de retenue.

10. Véhicule automobile selon au moins l'une des revendications 1 à 9, **caractérisé en ce qu'**un dispositif de commande (25) est prévu qui inhibe au moins le déplacement du véhicule et/ou émet un signal acoustique et/ou optique lorsque ladite au moins une barre (13) ne se trouve pas dans la position de retenue.

11. Véhicule automobile selon la revendication 10, **caractérisé en ce qu'**au niveau dudit au moins un siège de conducteur (8), au moins un interrupteur de contact de siège (26) est prévu qui est en relation fonctionnelle avec le dispositif de commande (25) qui interroge un ordre d'actionnement entre le déclenchement dudit au moins un interrupteur de contact de siège (26) et le déplacement de ladite au moins une barre (13) dans la position de retenue.
